# DEMANDE DE BREVET EUROPEEN

(11) **EP 3 326 981 A1**
(43) Date de publication de la demande: **30.05.2018**
(21) Numéro de dépôt: 17204002.4
(22) Date de dépôt: 28.11.2017
(51) Int. Cl.: C04B 28/02, C04B 28/08

(54) **COMPOSITION DE GENIE CIVIL COMPORTANT AU MOINS UN SEL COMME ACTIVATEUR D'HYDRATATION**

(30) Priorité: 28.11.2016 FR 1661600
(71) Demandeur: EQIOM, 92593 Levallois Peret Cedex (FR)
(72) Inventeur: MAHOUCHE, Hubert, 59770 MARLY (FR)
(74) Mandataire: Lavialle, Bruno François Stéphane

(57) **Abrégé**

Composition de génie civil, comportant au moins un liant hydraulique, au moins un ajout minéral et au moins un activateur d'hydratation comprenant au moins un sel d'au moins un des éléments suivants : calcium, potassium, sodium et lithium.

## Description

La présente invention concerne le génie civil au sens large et notamment la construction et/ou la réparation d'infrastructures urbaines, d'infrastructures de transport, de bâtiments industriels et de bâtiments d'habitation ; le renforcement de sols...

L'invention concerne plus précisément des compositions de génie civil telles que :
- une composition utilisable en tant qu'additif pour les ciments et/ou les mélanges de ciments, conformes notamment à la norme européenne EN 197 (CEM II, CEM III, CEM IV, ou CEM V), ou pour des ciments sursulfatés conformes notamment à la norme européenne EN 15743 ;
- une composition utilisable en tant qu'additif entrant dans la formulation des bétons conformes notamment à la norme européenne EN 206-1, et en particulier les bétons prêts à l'emploi et les bétons pour la préfabrication ;
- une composition utilisable en tant qu'additif entrant dans la formulation des bétons pour éléments préfabriqués couverts par d'autres normes ;
- une composition utilisable en tant qu'additif entrant dans la formulation des mortiers et des coulis ;
- une composition, utilisable en tant qu'additif, pouvant contenir un ou des liants hydrauliques latents (par exemples des laitiers tels que décrits dans la norme européenne EN 15167-1 et/ou des cendres volantes telles que décrites dans la norme européenne EN 450-1).

### ARRIERE PLAN DE L'INVENTION

Il est connu que la fabrication du ciment, et plus particulièrement l'opération de cuisson nécessaire à l'obtention du clinker qui est le principal composant du ciment, est responsable de l'émission, dans l'atmosphère, d'une quantité importante de gaz à effet de serre. Les normes anti-pollution, qui s'appliquent désormais à l'industrie cimentière, ont incité à une modification de la composition des ciments pour remplacer au moins une partie du clinker par d'autres matériaux couramment dénommés ajouts minéraux. On compte parmi ces ajouts minéraux :
- les laitiers de hauts fourneaux, d'aciéries, de fours électriques...
- les cendres volantes issues notamment des centrales thermiques,
- les matériaux naturels ou artificiels présentant des propriétés pouzzolaniques et/ou hydrauliques latentes...

Toutefois, comparativement aux ciments classiques par exemple de type Portland, les ciments aux ajouts ont - après mélange avec de l'eau pour la formation de coulis, de mortier ou de béton - des performances mécaniques se développant plus lentement, notamment aux basses températures, alors que la vitesse de développement des performances mécaniques dicte la vitesse d'avancement du chantier, et donc son coût.

Pour pallier à cet inconvénient, il est connu de recourir à des accélérateurs de prise et/ou de durcissement. Ceci n'apporte toutefois pas pleine satisfaction, en particulier aux basses températures et à court terme (de quelques heures à un ou deux jours après le gâchage). Or, la vitesse de développement des performances mécaniques à court terme est très importante notamment parce qu'elle conditionne la durée de maintien en place des coffrages dans lequel le béton est coulé.

### OBJET DE L'INVENTION

Un but de l'invention est de fournir une composition permettant l'obtention d'un béton, d'un mortier ou d'un coulis présentant des performances mécaniques acceptables, notamment à court terme, tout en utilisant un liant hydraulique latent.

### RESUME DE L'INVENTION

A cet effet, on prévoit, selon l'invention, une composition de génie civil, comportant au moins un liant hydraulique latent et au moins un activateur d'hydratation comprenant au moins un sel d'au moins un des éléments suivants : calcium, potassium, sodium et lithium.

L'activation de l'hydratation au moyen d'au moins un des sels mentionnés entraîne une cinétique de prise et de durcissement relativement élevée qui favorise le développement relativement rapide de performances mécaniques. Ainsi, comparativement aux bétons, mortiers ou coulis antérieurs, il est possible d'obtenir des bétons, mortiers ou coulis présentant de meilleures performances mécaniques à pourcentage de liant hydraulique latent égal.

D'autres caractéristiques et avantages de l'invention ressortiront à la lecture de la description qui suit de modes de réalisation particuliers non limitatifs de l'invention.

### DESCRIPTION DETAILLEE DE L'INVENTION

L'invention concerne ici une composition de génie civil comprenant :
- au moins un liant hydraulique latent (comme par exemple des laitiers et/ou des cendres volantes) ;
- au moins un activateur d'hydratation comprenant au moins un sel.

La composition comprend ici avantageusement des ajouts minéraux contenant un matériau possédant des propriétés hydrauliques latentes ou pouzzolaniques. Les ajouts minéraux comprennent par exemple des scories, des schistes calcinés, des pouzzolanes naturelles et / ou artificielles...

Plus précisément, l'activateur d'hydratation comprend au moins un sel d'au moins un des éléments suivants : calcium, potassium, sodium et lithium. Le sel peut être un nitrate, un formiate ou un thiocyanate. L'activateur d'hydratation peut comprendre plusieurs sels tels qu'un nitrate, un formiate et/ou un thiocyanate. Les pourcentages de sels peuvent varier sur une plage de 0,1% à 5% en poids environ.

Plusieurs exemples de cette composition vont maintenant être décrits.

### Exemples de composition dans laquelle l'activateur d'hydratation comprend au moins un sel de calcium.

### Exemple 1

Selon un premier exemple de réalisation, l'activateur d'hydratation est un sel de calcium tel qu'un nitrate de calcium ou un formiate de calcium et le sel est dosé entre 1 % et 3 % environ du poids total. Les gains de performances en résistance mécanique, par rapport à un béton qui ne comprendrait pas la composition de l'invention, sont de l'ordre de 50 % à 300 % un jour après le gâchage et sont compris entre 0% et 40 % environ vingt-huit jours après le gâchage.

### Exemple 2

Selon un deuxième exemple de réalisation, l'activateur d'hydratation comprend au moins un sel de calcium et au moins un sel d'aluminium. Le sel d'aluminium est de préférence un sulfate. Chaque sel est présent dans la composition à un dosage compris entre 0,5% et 1,5% environ du poids total. Les gains de performances à un jour, par rapport à un béton qui ne comprendrait pas la composition de l'invention sont supérieurs à 250% environ et à vingt-huit jours supérieurs à 25% environ. L'adjonction de sel d'aluminium est avantageuse du fait de son prix moins élevé.

En variante, le sel d'aluminium est un sulfate double d'aluminium et de potassium.

### Exemple 3

Selon un troisième exemple de réalisation, l'activateur d'hydratation comprend au moins un sel de calcium et au moins un sel de sodium.

En variante, l'activateur d'hydratation comprend plusieurs sels de calcium et/ou plusieurs sels de sodium.

### Exemple 4

Selon un quatrième exemple de réalisation, l'activateur d'hydratation comprend un sel de calcium et un sel de sodium qui sont combinés à un élément actif d'oxyde de calcium. L'élément actif d'oxyde de calcium est présent à une teneur comprise entre 0,5% et 3% environ du poids total. Le gain de résistance, par rapport à une composition sans sel, est de 50% à 400% environ à un jour et de plus de 50% environ à vingt-huit jours.

En variante, l'activateur d'hydratation comprend un sel de calcium, un sel de sodium et un sel d'aluminium, qui sont tous trois combinés à un élément actif d'oxyde de calcium.

### Exemple 5

Selon un cinquième exemple de réalisation, l'activateur d'hydratation comprend au moins un sel de calcium et au moins un sel de potassium.

En variante, l'activateur d'hydratation comprend plusieurs sels de calcium et/ou plusieurs sels de potassium.

### Exemple 6

Selon un sixième exemple de réalisation, l'activateur d'hydratation comprend au moins un sel de calcium et au moins un sel de lithium.

En variante, l'activateur d'hydratation comprend plusieurs sels de calcium et/ou plusieurs sels de lithium.

### Exemples de composition dans laquelle l'activateur d'hydratation comprend au moins un sel de lithium.

### Exemple 1

Selon un premier exemple de réalisation, l'activateur d'hydratation est un sel de lithium tel qu'un nitrate de lithium ou un formiate de lithium et le sel est dosé entre 1 % et 3 % environ du poids total.

### Exemple 2

Selon un deuxième exemple de réalisation, l'activateur d'hydratation comprend au moins un sel de lithium et au moins un sel d'aluminium. Le sel d'aluminium est de préférence un sulfate. Chaque sel est présent dans la composition à un dosage compris entre 0,5% et 1,5% environ du poids total.

En variante, le sel d'aluminium est un sulfate double d'aluminium et de potassium.

### Exemple 3

Selon un troisième exemple de réalisation, l'activateur d'hydratation comprend au moins un sel de lithium et au moins un sel de sodium.

En variante, l'activateur d'hydratation comprend plusieurs sels de lithium et/ou plusieurs sels de sodium.

### Exemple 4

Selon un quatrième exemple de réalisation, l'activateur d'hydratation comprend au moins un sel de lithium et au moins un sel de potassium.

En variante, l'activateur d'hydratation comprend plusieurs sels de lithium et/ou plusieurs sels de potassium.

### Exemples de composition dans laquelle l'activateur d'hydratation comprend au moins un sel de sodium.

### Exemple 1

Selon un premier exemple de réalisation, l'activateur d'hydratation est un sel de sodium tel qu'un nitrate de sodium ou un formiate de sodium et le sel est dosé entre 1 % et 3 % environ du poids total.

### Exemple 2

Selon un deuxième exemple de réalisation, l'activateur d'hydratation comprend un sel de sodium et un sel d'aluminium. Le sel d'aluminium est de préférence un sulfate. Chaque sel est présent dans la composition à un dosage compris entre 0,5% et 1,5% environ du poids total. Les gains de performances à un jour, par rapport à un béton qui ne comprendrait pas la composition de l'invention sont supérieurs à 250% environ et à vingt-huit jours supérieurs à 25% environ.

En variante, le sel d'aluminium est un sulfate double d'aluminium et de potassium.

### Exemple 3

Selon un troisième exemple de réalisation, l'activateur d'hydratation comprend au moins un sel de sodium et au moins un sel de potassium.

En variante, l'activateur d'hydratation comprend plusieurs sels de sodium et/ou plusieurs sels de potassium.

### Exemples de composition dans laquelle l'activateur d'hydratation comprend au moins un sel de potassium.

### Exemple 1

Selon un premier exemple de réalisation, l'activateur d'hydratation est un sel de potassium tel qu'un nitrate de potassium ou un formiate de potassium et le sel est dosé entre 1 % et 3 % environ du poids total.

### Exemple 2

Selon un deuxième exemple de réalisation, l'activateur d'hydratation comprend au moins un sel de potassium et au moins un sel d'aluminium. Le sel d'aluminium est de préférence un sulfate. Chaque sel est présent dans la composition à un dosage compris entre 0,5% et 1,5% environ du poids total.

En variante, le sel d'aluminium est un sulfate double d'aluminium et de potassium.

La composition selon les exemples précédents peut être utilisée directement en cimenterie et/ou en centre de broyage et/ou en station de mélange pour constituer des ciments de type CEM II, CEM III, CEM IV ou CEM V, comme définis dans la norme européenne EN 197-1.

La composition selon les exemples précédents peut aussi être mélangée à des ciments tels que ceux définis dans la norme européenne EN 197-1. Par exemple, le mélange peut être réalisé dans le malaxeur d'une centrale à béton d'unité de fabrication de béton prêt à l'emploi ou d'une unité de préfabrication.

Une composition utilisable pour former un ciment sursulfaté conforme à la norme européenne EN 15743 va maintenant être décrite.

La composition de ciment sursulfaté selon l'invention comprend par exemple du laitier et du sulfate de calcium dans une proportion dépassant 90% du poids total des constituants, et du clinker. La composition comprend en outre un activateur d'hydratation qui est ici un sel de calcium tel que le nitrate, le formiate, ou le thiocyanate. Avec un dosage de sel compris entre 0,8 % et 3 % environ du poids total, les gains de résistance, par rapport à une composition sans sel de calcium, sont de l'ordre de 50 % à 300 % environ à un jour et sont compris entre 0 % et 40 % environ à vingt-huit jours. La composition peut comprendre plusieurs sels de calcium.

Selon une première variante, le sel de calcium est remplacé par au moins un sel de sodium tel que le nitrate de sodium, le formiate de sodium ou le thiocyanate de sodium.

Selon une deuxième variante, la composition comprend un sel de calcium et un sel de sodium ou de potassium.

Selon une troisième variante, la composition peut comprendre plusieurs sels de calcium et/ou plusieurs sels de sodium ou de potassium.

Dans d'autres variantes, la composition pour ciment sursulfaté peut comprendre un ou plusieurs sels de lithium et/ou un ou plusieurs sels de potassium en lieu et place du sel de calcium.

Bien entendu, l'invention n'est pas limitée aux modes de réalisation décrits et on peut y apporter des variantes de réalisation sans sortir du cadre de l'invention telle que définie par les revendications.

Par exemple :
- au moins un sel de l'activateur peut être un nitrate, un formiate, ou un thiocyanate ;
- l'activateur d'hydratation peut comprendre plusieurs sels tels qu'un nitrate, un formiate et/ou un thiocyanate ;
- le ou les sels sont présents à un dosage total en poids compris entre 0,5 % et 3 % environ, de préférence entre 0,8 % et 3 % environ, encore de préférence entre 1 % et 3 % environ ou bien encore entre 0,5% et 1,5% environ ;
- la composition peut comprendre un liant hydraulique classique tel que du clinker ;
- la composition peut comprendre ou pas un ajout minéral possédant des propriétés hydrauliques latentes ou pouzzolaniques et par exemple l'un au moins des matériaux suivants : pouzzolane naturelle, pouzzolane artificielle, laitier, scorie, cendres volantes, schiste calciné, métakaolin, fumées de silice...
- dans les exemples décrits, les sels de l'activateur d'hydratation peuvent être combinés à élément actif d'oxyde de calcium.

On notera que la composition de l'invention est notablement intéressante dans la formulation de ciments aux ajouts. En particulier, de relativement bonnes performances ont été obtenues pour des ciments aux ajouts ayant une relativement forte proportion de laitier (CEM III).

## Revendications

1. Composition de génie civil, comportant au moins un liant hydraulique latent et au moins un activateur d'hydratation comprenant au moins un sel d'au moins un des éléments suivants : calcium, potassium, sodium et lithium ; au moins un sel de l'activateur étant un nitrate, un formiate ou un thiocyanate ; le ou les sels de l'activateur étant présents à un dosage total en poids compris entre 0,1 % et 5 % environ du poids total.

2. Composition selon la revendication 1, dans laquelle l'activateur d'hydratation comprend ledit au moins un sel de calcium, potassium, sodium ou lithium, et au moins un sel d'aluminium.

3. Composition selon la revendication 2, dans laquelle le sel d'aluminium est un sulfate.

4. Composition selon la revendication 3, dans laquelle le sel d'aluminium est un sulfate double d'aluminium et de potassium.

5. Composition selon la revendication 1, dans laquelle l'activateur d'hydratation comprend au moins un sel de calcium et au moins un sel de sodium.

6. Composition selon la revendication 5, dans laquelle l'activateur d'hydratation comprend plusieurs sels de calcium et/ou plusieurs sels de sodium.

7. Composition selon la revendication 5, dans laquelle le sel de calcium et le sel de sodium sont combinés à un élément actif d'oxyde de calcium.

8. Composition selon la revendication 7, dans laquelle l'activateur d'hydratation comprend en outre un sel d'aluminium ; le sel de calcium, le sel de sodium et le sel d'aluminium étant tous trois combinés à un élément actif d'oxyde de calcium.

9. Composition selon la revendication 1, dans laquelle l'activateur d'hydratation comprend au moins un sel de calcium et au moins un sel de potassium.

10. Composition selon la revendication 9, dans laquelle l'activateur d'hydratation comprend plusieurs sels de calcium et/ou plusieurs sels de potassium.

11. Composition selon la revendication 1, dans laquelle l'activateur d'hydratation comprend au moins un sel de calcium et au moins un sel de lithium.

12. Composition selon la revendication 11, dans laquelle l'activateur d'hydratation comprend plusieurs sels de calcium et/ou plusieurs sels de lithium.

13. Composition selon la revendication 1, dans laquelle l'activateur d'hydratation comprend au moins un sel de lithium et au moins un sel de sodium.

14. Composition selon la revendication 13, dans laquelle l'activateur d'hydratation comprend plusieurs sels de lithium et/ou plusieurs sels de sodium.

15. Composition selon la revendication 1, dans laquelle l'activateur d'hydratation comprend au moins un sel de lithium et au moins un sel de potassium.

16. Composition selon la revendication 15, dans laquelle l'activateur d'hydratation comprend plusieurs sels de lithium et/ou plusieurs sels de potassium.

17. Composition selon l'une quelconque des revendications précédentes, dans laquelle l'activateur d'hydratation comprend plusieurs sels tels qu'un nitrate, un formiate et/ou un thiocyanate.

18. Composition selon la revendication 1, dans laquelle les sels sont présents à un dosage total en poids compris entre 0,5 % et 3 % environ du poids total.

19. Composition selon la revendication 18, dans laquelle le sel est présent à un dosage en poids compris entre 0,8 % et 3 % environ.

20. Composition selon la revendication 19, dans laquelle le sel est présent à un dosage en poids compris entre 1 % et 3 % environ.

21. Composition selon la revendication 18, dans laquelle le sel est présent à un dosage en poids compris entre 0,5% et 1,5% environ.

22. Composition selon l'une quelconque des revendications précédentes, comprenant un liant hydraulique classique tel que du clinker.

23. Composition selon l'une quelconque des revendications précédentes, comprenant également un ajout minéral possédant des propriétés hydrauliques latentes ou pouzzolaniques.

24. Composition selon la revendication 23, dans laquelle l'ajout minéral comprend l'un au moins des matériaux suivants : pouzzolane naturelle, pouzzolane artificielle, laitier, scorie, cendres volantes, schiste calciné, métakaolin, fumées de silice.
